Europäisches Patentamt

European Patent Office

Office européen des brevets

(19)

(11) Veröffentlichungsnummer: **0 084 675**
**B1**

(12) **EUROPÄISCHE PATENTSCHRIFT**

(45) Veröffentlichungstag der Patentschrift:
**11.03.87**

(51) Int. Cl.⁴: **H 04 J 3/07, H 04 L 7/00**

(21) Anmeldenummer: **82111963.3**

(22) Anmeldetag: **23.12.82**

(54) **Verfahren und Anordnung zur Taktsynchronisierung auf der Empfangsseite eines plesiochronen Übertragungssystems.**

(30) Priorität: **27.01.82 DE 3202540**

(43) Veröffentlichungstag der Anmeldung:
**03.08.83 Patentblatt 83/31**

(45) Bekanntmachung des Hinweises auf die Patenterteilung:
**11.03.87 Patentblatt 87/11**

(84) Benannte Vertragsstaaten:
**BE DE FR GB IT NL**

(56) Entgegenhaltungen:
**DE - A - 2 757 462**
**DE - B - 2 824 137**
**US - A - 3 940 558**

**PATENTS ABSTRACTS OF JAPAN, Band 4, Nr. 1(E-163),
8. Januar 1980, Seite 59E163**
**POST OFFICE ELECTRICAL ENGINEERS JOURNAL,
Band 69, Nr. 2, Juli 1976, Seiten 93-102, London, GB;
E.R. BRIGHAM et al.: "Multiplexing for a digital main
network"**

(73) Patentinhaber: **ANT Nachrichtentechnik GmbH,
Gerberstrasse 33, D-7150 Backnang (DE)**

(72) Erfinder: **Schmitz, Johann, Dipl.-Ing.,
Eugen-Bolz-Strasse 14, D-7150 Backnang (DE)**

(74) Vertreter: **Schickle, Gerhard, Dipl.-Ing. et al, ANT
Nachrichtentechnik GmbH Patent- und Lizenzabteilung
Gerberstrasse 33, D-7150 Backnang (DE)**

## Beschreibung

Verfahren zur Taktsynchronisierung auf der Empfangsseite eines plesiochronen Übertragungssystems, wobei mit Hilfe eines Phasenregelkreises dessen Phasendetektor ein Steuersignal für einen spannungsgesteuerten Oszillator liefert und das Ausgangssignal dieses Oszillators in dem Phasenregelkreis rückgekoppelt wird, das kanalbezogene lückenhafte Taktsignal des Demultiplexers so geglättet wird, dass sich ein kontinuierliches Taktsignal mit der Nennfrequenz des Nachrichtensignals ergibt.

Bekanntlich kann bei plesiochronen Digitalsignal-Multiplexgeräten, die nach einem positiven oder ähnlichen Taktanpassungsverfahren arbeiten, nur dann auf der Empfangsseite in einem Phasenregelkreis der Primärtakt angepasst an den sendeseitigen wiedergewonnen werden, wenn das Stopfkennungswort, in dem die Information der Taktanpassung übertragen wird, nicht gestört ist. Geht diese Information verloren, bekommt der Phasenregelkreis kein eindeutiges Regelkriterium mehr. Der Empfangstakt entfernt sich aus seiner vorgeschriebenen Toleranzgrenze.

Um ein hohes Mass an Übertragungssicherheit zu bekommen, wird das Stopfkennungswort redundant verteilt in den Rahmenstrukturen der Digitalsignal-Multiplexgeräte angeordnet. So besteht das Stopfkennungswort z. B. beim Sekundär- und Ternärsystem aus je drei Bits und beim Quaternär- und Quintärsystem sogar aus fünf Bits. Da bei Auswertung des Stopfkennungswortes ein Majoritätsentscheid vorgenommen wird, kann es sogar bis zu einem gewissen Umfang fehlerbehaftet sein.

Bekannterweise können Büschelstörungen auftreten derart, dass das Rahmenkennungswort gestört wird und es zu einem Ausfall der Rahmenkennung kommen kann. In diesem Fall kann die Empfangsseite das Stopfkennungswort nicht mehr richtig erkennen und die Frequenz des Signals von der Phasenregelschleife kann aus ihrem vorgeschriebenen Toleranzbereich ausbrechen. Bei den genannten Systemen wird dann ein AIS (Alarmindicationssignal) ausgesendet. Es muss vermieden werden, dass sowohl bei Ausfall als auch bei Wiedereintritt der Rahmenkennung die Frequenzen der Taktsignale der Phasenregelschleife die vorgeschriebenen Toleranzen verlassen, damit nachgeschaltete Regeneratorstrecken taktsynchron bleiben.

Bei Multiplexern, die z.B. nach dem positiven Stopfverfahren arbeiten, muss das zurückgewonnene, auf den Kanal bezogene, durch Systemparameter bedingte diskontinuierliche Empfangstaktsignal Tm mit Hilfe des Phasenregelkreises in ein kontinuierliches Taktsignal TE übergeführt werden.

Die Empfangsseite kann bei Ausfall der Rahmenkennung das Stopfkennungswort nicht mehr richtig auswerten. Es muss auf jeden Fall dafür gesorgt werden, dass sowohl bei Alarmbeginn das ausgesendete AIS als auch bei Alarmende das das AIS ablösende Informationssignal innerhalb der vorgeschriebenen Toleranzgrenzen der Bitfolgefrequenzen liegen.

Der Erfindung liegt die Aufgabe zugrunde, ein Verfahren der eingangs genannten Art anzugeben, mit dem es möglich ist, auch während Störungen, bei denen das Stopfkennungswort auf der Empfangsseite nicht mehr erkannt werden kann, insbesondere bei Alarmbeginn und bei Alarmende, die Frequenz des Empfangstaktes (Te) exakt zu erhalten.

Die Aufgabe wird dadurch gelöst, dass bei Beginn eines Alarms, während des Alarms und beim Ende des Alarms die Steuerspannung für den spannungsgesteuerten Oszillator des Regelkreises durch eine Umschaltung mit Hilfe einer Logikschaltung auf dem Betrag des eingeschwungenen Zustandes festgehalten wird, so dass die Nennfrequenz des Nachrichtensignals auch bei einer Störung erhalten bleibt, dass bei Alarmbeginn die Logikschaltung eine Umschaltung in der Weise vornimmt, dass anstelle des verjitterten Ausgangssignals des Phasendetektors ein jitterfreies Signal mit dem gleichen Tastverhältnis wie das verjitterte Ausgangssignal des Phasendetektors als Steuerkriterium dem Regelkreis zugeführt wird, dass erste bei Alarmende diese Umschaltung mit Hilfe der Logikschaltung in der Weise wieder rückgängig gemacht wird, dass das kanalbezogene lückenhafte Taktsignal des Demultiplexers zu dem Zeitpunkt wieder zugeschaltet wird, bei dem mit Sicherheit keine Lücke im Taktverlauf vorhanden ist und der Mittelwert des Phasenhubes eines Übertragungszeitrahmens erreicht ist.

Eine Anordnung zur Verwirklichung des Verfahren gemäss Anspruch 1, wobei das kanalbezogene lückenhafte Taktsignal des Demultiplexers und das kontinuierliche Taktsignal jeweils über einen Zähler und Decodierer einem Phasendetektor zugeführt und dort beide Taktsignale miteinander vergleichbar sind, wobei mit dem gefilterten Ergebnissignal des Vergleichs ein spannungsgesteuerter Oszillator steuerbar ist, an dessen Ausgang das kontinuierliche Taktsignal anliegt, ist dadurch gekennzeichnet, dass der Ausgang des Phasendetektors mit dem ersten Eingang einer ersten Und-Schaltung verbunden ist, dass der zweite Eingang der ersten Und-Schaltung mit dem invertierten Ausgang eines ersten Flip-Flops verbunden ist, dass der Ausgang der ersten Und-Schaltung mit dem ersten Eingang einer Oder-Schaltung verbunden ist, dass der Rücksetzeingang eines ersten Zählers mit dem normalen Ausgang des ersten Flip-Flops und mit dem ersten Eingang einer zweiten Und-Schaltung verbunden ist, dass der Ausgang der zweiten Und-Schaltung mit dem zweiten Eingang der Oder-Schaltung verbunden ist, dass der Ausgang der Oder-Schaltung mit dem Eingang eines Tiefpassfilters verbunden ist, dass das lückenhafte Taktsignal mit dem Zählereingang des ersten Zählers und mit dem Takteingang eines zweiten Flip-Flops verbunden ist, dass ein Alarmsignal zum einen direkt mit dem D-Eingang des ersten Flip-Flops, zum anderen über ein Invertierglied mit dem Setzeingang des ersten Flip-Flops verbunden ist, dass das decodierte kontinuierliche Taktsignal dem D-Eingang des zweiten Flip-Flops zugeführt ist und dass dem R-Eingang des zweiten Flip-Flops das Rahmensignal zugeführt ist.

Eine weitere Ausbildung einer solchen Anordnung nach Anspruch 2 ist dadurch gekennzeichnet, dass aus dem decodierten kontinuierlichen Taktsignal und dem kontinuierlichen Taktsignal mit Hilfe einer Impulsformer-Schaltung ein sehr schmaler Impuls erzeugbar ist, der in der Mitte des decodierten, kontinuierlichen Taktsignals liegt und anstelle des decodierten kontinuierlichen Taktsignals dem D-Eingang des zweiten Flip-Flops zugeführt ist.

Eine weitere Ausbildung einer solchen Anordnung nach Anspruch 3 ist dadurch gekennzeichnet, dass die Impulsformer-Schaltung so aufgebaut ist, dass an den ersten Eingängen zweier Und-Schaltungen das kontinuierliche Taktsignal und an den zweiten Eingängen dieser Und-Schaltungen das decodierte kontinuierliche Taktsignal anliegt, dass der Ausgang der Und-Schaltung über ein Invertierglied, das gleichzeitig als Laufzeitglied dient, mit dem ersten Eingang einer dritten Und-Schaltung und der Ausgang der zweiten Und-Schaltung direkt mit dem zweiten Eingang der dritten Und-Schaltung verbunden ist und dass am Ausgang der dritten Und-Schaltung ein sehr schmaler Impuls anliegt.

Im folgenden sei die Erfindung anhand von Figuren näher erläutert.

Fig. 1 zeigt das Prinzipschaltbild eines Phasenregelkreises, dabei bedeutet Tm kanalbezogenes lückenhaftes Taktsignal, TE kontinuierliches Taktsignal.

Fig. 2 zeigt das Impulsdiagramm des Phasendetektors.

Fig. 3 zeigt eine erfindungsgemässe Anordnung, dabei bedeutet C Alarmsignal, d.h. im Alarmfall ist C = «1», D ist das Rahmensignal.

Fig. 4 zeigt ein Ausführungsbeispiel für eine Impulsformer-Schaltung S, wie sie in Fig. 3 verwendet werden kann.

Fig. 5 zeigt ein Impulsdiagramm für die Signale wie sie in Fig. 3 auftreten, dabei hat die Einphasung einen geringen, in der Toleranz liegenden Unsicherheitsbereich.

Fig. 6 zeigt ein entsprechendes Impulsdiagramm wie in Fig. 5 mit einer Einphasung ohne Unsicherheitsbereich.

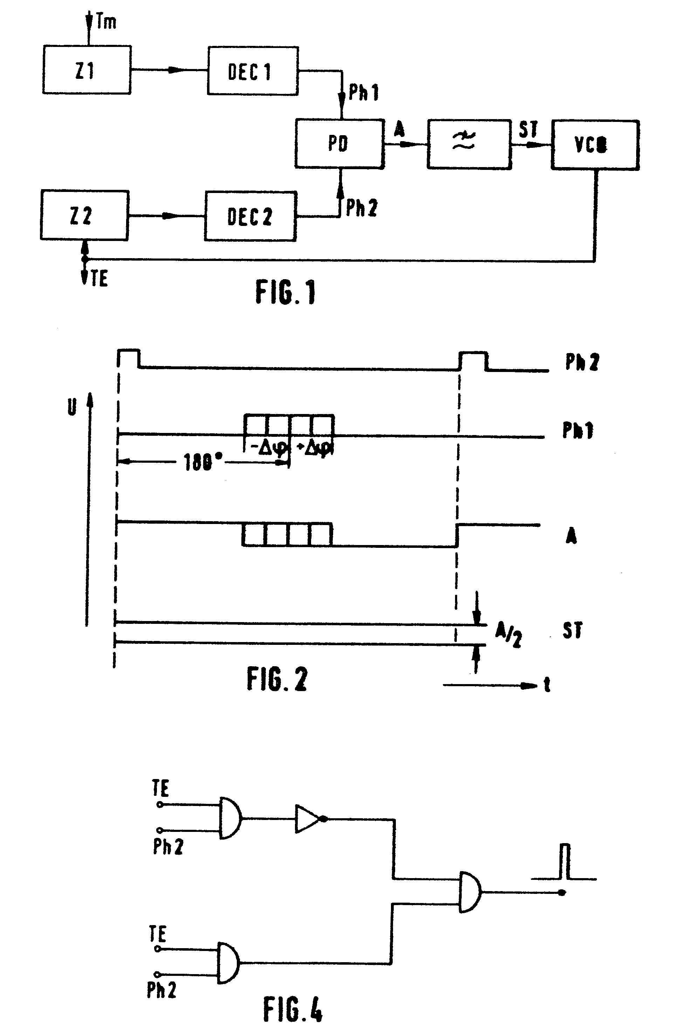

Fig. 1 zeigt das Prinzipschaltbild eines Phasenregelkreises, wie er aus dem Buch von Dr. R. Best «Theorie und Anwendung des Phase-locked-Loops», AT-Fachverlag, Stuttgart, bekannt ist. Einem Phasendetektor PD werden die beiden Vergleichssignale Ph1 und Ph2 zugeführt. Das eine wird aus dem kontinuierlichen Taktsignal TE über den Zähler Z2 und die Decodierung DEC2, das andere aus dem diskontinuierlichen, vom Demultiplexer stammende Taktsignal Tm über den Zähler Z1 und die Decodierung DEC1 gewonnen.

Das Ausgangssignal A des Phasendetektors PD wird über ein Tiefpassfilter mit sehr niedriger Grenzfrequenz zu einem Steuersignal ST = A/2 integriert, bei dem sich die Nennfrequenz des Taktsignals TE vom spannungsgesteuerten Oszillator VCO einstellt.

Fig. 2 zeigt das Impulsdiagramm des Phasendetektors der Regelschleife. Das vom diskontinuierlichen Taktsignal Tm abgeleitete Phasenvergleichssignal Ph1 ist mit einem Systemjitter behaftet und hat aufgrund des Regelprinzips der Schleife eine Phasenverschiebung von $180° \pm \Delta\varphi$ gegenüber dem Signal Ph2, das von diesem Jitter befreit ist.

Alarmbeginn

Der Phasendetektor PD, der von den Vergleichssignalen Ph1 und Ph2 aktiviert wird, stellt nichts anderes dar als ein bistabiles Element. Dabei liegt der Phasenschwankungsbereich des Ausgangssignals A symmetrisch zur Mitte des Vergleichssignals Ph2 (Fig. 2). Das verjitterte Ausgangssignal A des Phasendetektors PD wird in dem nachfolgenden Tiefpassfilter von diesem Jitter befreit und auf seinen halben Amplitudenwert A/2 integriert. Dabei stellt sich die Nennfrequenz des Taktsignals TE ein.

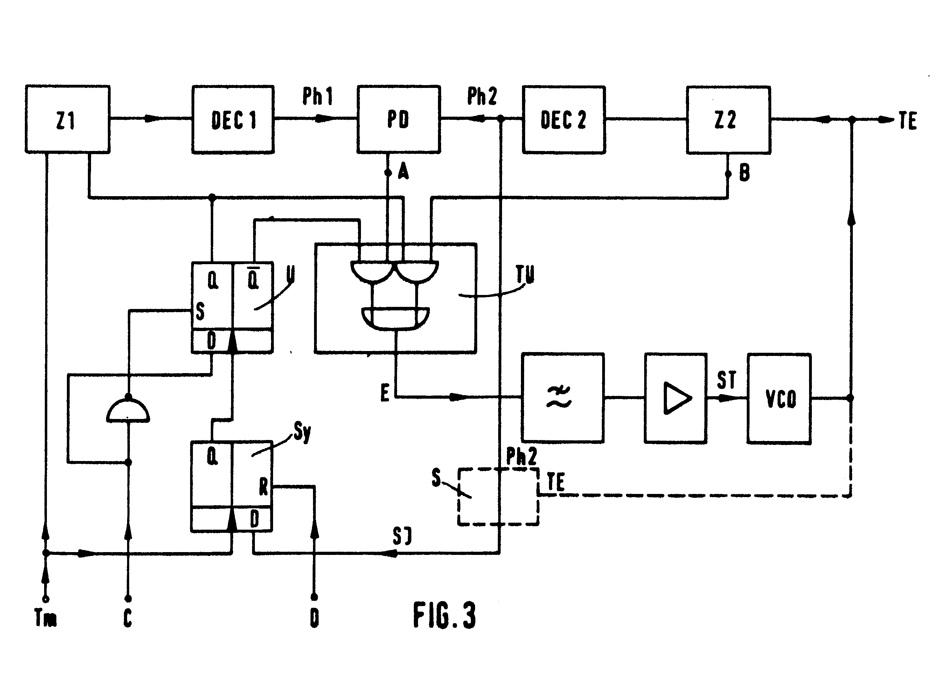

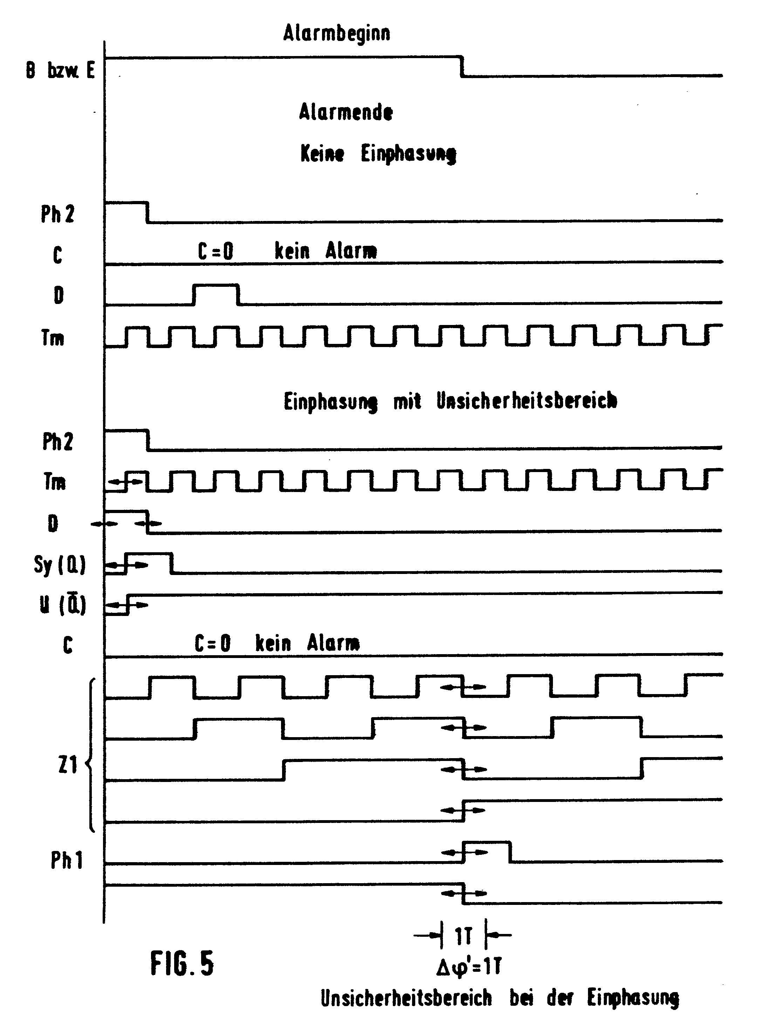

Wenn man beim Alarmbeginn dafür sorgt, dass das verjitterte Ausgangssignal A abgelöst wird durch ein unverjittertes, vom Oszillatortaktsignal TE abgeleitetes Signal B, so bildet das Tiefpassfilter ebenfalls den halben Amplitudenwert A/2 und es stellt sich wiederum die Nennfrequenz ein (Fig. 3 und 5). Der Phasenregelkreis arbeitet nun nicht mehr nach einem Regelkriterium, sondern nach dem absoluten Betrag A/2. Der quarzstabilisierte spannungsgesteuerte Oszillator VCO im Phasenregelkreis läuft nun mit der ihm eigenen hohen Stabilität innerhalb der vom System vorgegebenen Toleranz. Bei diesem Vorgang treten keine Phasensprünge auf und dadurch auch keine Frequenzänderungen. Dies wird in Fig. 3 dadurch erreicht, dass die Taktumschaltung TU über das Alarmsignal C (Alarmfall C = «1») und das Umschalte-Flip-Flop (U) so aktiviert wird, dass das Signal B (Fig. 5) passieren kann.

Alarmende

Tritt das Alarmende ein, so wird auf das diskontinuierliche Taktsignal Tm zurückgeschaltet. Das von diesem abgeleitete Phasenvergleichssignal Ph 1 kann beliebig innerhalb der Schrittdauer des Phasenvergleichssignals Ph2 liegen. Das Phasendetektorsignal kann somit beliebige Tastverhältnisse annehmen. Da diese gross sein können, erfahren die Filterkondensatoren der Phasenregelschleife grössere Umladungen. Das unsymmetrische Tastverhältnis wird durch den Regelvorgang der Schleife allmählich abgebaut. Es findet ein Einschwingvorgang statt, der je nach Tastverhältnis Steuerspannungssprünge erzeugt, die so gross sein können, dass die damit einhergehenden Frequenzänderungen den vorgegebenen Toleranzbereich der Oszillatorfrequenzen bei weitem übersteigen.

Dieser Vorgang wird noch dadurch unterstützt, dass die Gesamtschleifenverstärkung K der Regelschleife im allgemeinen gross ausgelegt werden muss, um nach der Beziehung

$$\Delta\varphi = \frac{\Delta\omega}{K}$$

K = Gesamtschleifenverstärkung
$\Delta\omega$ = Frequenzablage
$\Delta\varphi$ = Phasenablage

bei gegebenem kleinem Frequenzbereich $\Delta\omega$ eine kleine Phasenablage $\Delta\varphi$ zu bekommen. Bei grossen Phasenablagen, wie sie beim Alarmende auftreten können, ergeben sich somit grosse Frequenzänderungen.

Betrachtet man die Multiplexgeräte von der Sekundär- bis zur Quintärstufe, so haben alle etwa den gleichen Systemjitter von etwa 4T (Taktperiode). Berücksichtigt man ausserdem einen bestimmten Eingangsjitter, so wird von einem 8 Bit umfassenden Speicher etwa ¾ für den Gesamtjitterumfang verbraucht. Der Rest wird etwa je zur Hälfte auf Unsymmetrien bei der Abfrage und auf die Phasenablage $\Delta\varphi$ aufgeteilt. Für die Phasenablage $\Delta\varphi$ bleibt somit nur ein beschränkter Bereich übrig, der bei einem vorgegebenen Frequenztoleranzbereich $\Delta\omega$ nur durch eine definierte, im allgemeinen hohe Verstärkung genutzt werden kann.

Um die durch die stark unterschiedlichen Tastverhältnisse auftretenden Frequenzänderungen, die ausserhalb des Toleranzbereiches liegen, auf diesen Bereich hin zu reduzieren, muss eine Einphasung vorgenommen werden. Bekanntlich wird im Alarmfalle auf ein festes Tastverhältnis 2:1 geschaltet, bei dem keine Frequenzsprünge auftreten. Um einen ähnlichen Vorgang beim Zuschalten des lückenhaften Taktsignals Tm zu erreichen, muss zweierlei beachtet werden. Zum einen muss das Einsynchronisieren vom Phasenvergleichssignal Ph2 und zum anderen von einem Steuersignal D, das einer bestimmten Stelle im Rahmen zugeordnet ist, abhängig gemacht werden. Diese Stelle wird fixiert durch die Mitte des Amplitudenbereiches des Phasengebirges über mehrere Rahmen gesehen.

Die Figuren 3 und 5 verdeutlichen den Vorgang der Einphasung. Bei Alarmende geht das Alarmsignal C auf Null und gibt das bistabile Element U frei. Fällt das Phasenvergleichssignal Ph2 mit dem dazu asynchronen Rahmensignal D, dem das Taktsignal Tm fest zugeordnet ist, zusammen, dann wird das bistabile Element Sy gesetzt (zurückgesetzt durch D). Dieses aktiviert das Element U, das einmal das Ausgangssignal A des Phasendetektors PD durchschaltet und den Ausgang E der Taktumschaltung TU und zum anderen den bis jetzt blockierten Zähler Z1 freigibt. Dieser bildet mit der Decodierung DEC1 bekanntlich das Phasenvergleichssignal Ph1, das nun in der Mitte der Periode des Phasenvergleichssignals Ph2 liegt, behaftet mit einem gewissen Unsicherheitsbereich, bedingt durch die endliche Impulsbreite von Ph2 (im Beispiel $\Delta\varphi' \leq \pm 0,5\,T$). Die Gesamtschleifenverstärkung K muss nun so gross sein, dass die mit diesen kleinen Phasenablagen einhergehenden Frequenzänderungen kleiner sein müssen als der vom System her vorgegebene Toleranzbereich. Es muss daher gelten

$$\pm\Delta\varphi' < \pm\Delta\varphi = \frac{\pm\Delta\omega}{K}$$

$\Delta\varphi \triangleq$ Phasenablage, die dem Frequenztoleranzbereich zugeordnet ist,
$\Delta\varphi'$ = Unsicherheitsbereich

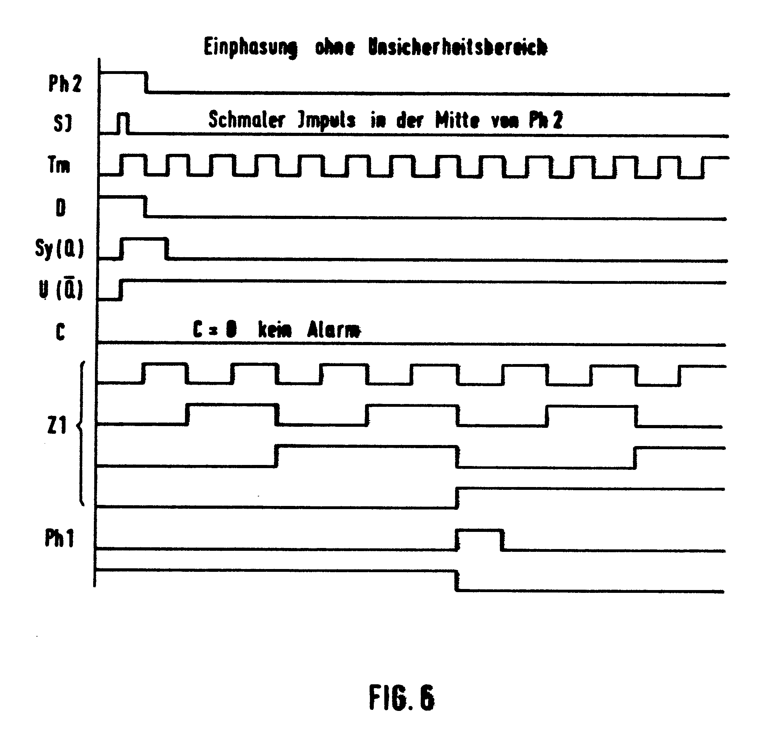

Wird aus dem Ph2-Signal und dem zugehörigen Taktsignal ein sehr schmaler Impuls (SI) (in der Mitte von Ph2) abgeleitet, dann treten keine Phasensprünge auf. Die Einphasung geschieht taktflankensynchron. Es entsteht kein Unsicherheitsbereich (Fig. 6).

## Patentansprüche

1. Verfahren zur Taktsynchronisierung auf der Empfangsseite eines plesiochronen Übertragungssystems, wobei mit Hilfe eines Phasenregelkreises dessen Phasendetektor ein Steuersignal für einen spannungsgesteuerten Oszillator liefert und das Ausgangssignal dieses Oszillators in dem Phasenregelkreis rückgekoppelt wird, das kanalbezogene lückenhafte Taktsignal (Tm) des Demultiplexers so geglättet wird, dass sich ein kontinuierliches Taktsignal (TE) mit der Nennfrequenz des Nachrichtensignals ergibt, dadurch gekennzeichnet, dass bei Beginn eines Alarms, während des Alarms und beim Ende des Alarms die Steuerspannung für den spannungsgesteuerten Oszillator (VCO) des Regelkreises durch eine Umschaltung mit Hilfe einer Logikschaltung auf dem Betrag des eingeschwungenen Zustandes festgehalten wird, so dass die Nennfrequenz des Nachrichtensignals auch bei einer Störung erhalten bleibt, dass bei Alarmbeginn die Logikschaltung eine Umschaltung in der Weise vornimmt, dass anstelle des verjitterten Ausgangssignals (A) des Phasendetektors (PD) ein jitterfreies Signal mit dem gleichen Tastverhältnis wie das verjitterte Ausgangssignal des Phasendetektors (PD) als Steuerkriterium dem Regelkreis zugeführt wird, dass erst bei Alarmende diese Umschaltung mit Hilfe der Logikschaltung in der Weise wieder rückgängig gemacht wird, dass das kanalbezogene lückenhafte Taktsignal (Tm) des Demultiplexers zu dem Zeitpunkt wieder zugeschaltet wird, bei dem mit Sicherheit keine Lücke im Taktverlauf vorhanden ist und der Mittelwert des Phasenhubes eines Übertragungszeitrahmens erreicht ist.

2. Anordnung zur Verwirklichung des Verfahrens gemäss Anspruch 1, wobei das kanalbezogene lückenhafte Taktsignal (Tm) des Demultiplexers und das kontinuierliche Taktsignal (TE) jeweils über einen Zähler (Z1; Z2) und Decodierer (DEC1; DEC2) einem Phasendetektor (PD) zugeführt und dort beide Taktsignale (Ph1, Ph2) miteinander vergleichbar sind, wobei mit dem gefilterten Ergebnissignal (ST) des Vergleichs ein spannungsgesteuerter Oszillator (VCO) steuerbar ist, an dessen Ausgang das kontinuierliche Taktsignal (TE) anliegt, dadurch gekennzeichnet, dass der Ausgang (A) des Phasendetektors (PD) mit dem ersten Eingang einer ersten Und-Schaltung verbunden ist, dass der zweite Eingang der ersten Und-Schaltung mit dem invertierten Ausgang ($\overline{Q}$)

eines ersten Flip-Flops (U) verbunden ist, dass der Ausgang der ersten Und-Schaltung mit dem ersten Eingang einer Oder-Schaltung verbunden ist, dass der Rücksetzeingang eines ersten Zählers (Z1) mit dem normalen Ausgang (Q) des ersten Flip-Flops (U) und mit dem ersten Eingang einer zweiten Und-Schaltung verbunden ist, dass der Taktausgang eines zweiten Zählers (Z2) mit dem zweiten Eingang der zweiten Und-Schaltung verbunden ist, dass der Ausgang der zweiten Und-Schaltung mit dem zweiten Eingang der Oder-Schaltung verbunden ist, dass der Ausgang (E) der Oder-Schaltung mit dem Eingang eines Tiefpassfilters verbunden ist, dass das lückenhafte Taktsignal (Tm) mit dem Zählereingang des ersten Zählers (Z1) und mit dem Takteingang eines zweiten Flip-Flops (Sy) verbunden ist, dass ein Alarmsignal (C) zum einen direkt mit dem D-Eingang des ersten Flip-Flops (U), zum anderen über ein Invertierglied mit dem Setzeingang (S) des ersten Flip-Flops (U) verbunden ist, dass das decodierte kontinuierliche Taktsignal (Ph2) dem D-Eingang des zweiten Flip-Flops (Sy) zugeführt ist und dass dem R-Eingang des zweiten Flip-Flops (Sy) das Rahmensignal (D) zugeführt ist.

3. Anordnung nach Anspruch 2, dadurch gekennzeichnet, dass aus dem decodierten kontinuierlichen Taktsignal (Ph2) und dem kontinuierlichen Taktsignal TE mit Hilfe einer Impulsformer-Schaltung (S) ein sehr schmaler Impuls (I) erzeugbar ist, der in der Mitte des decodierten, kontinuierlichen Taktsignals (Ph2) liegt und anstelle des decodierten kontinuierlichen Taktsignals (Ph2) dem D-Eingang des zweiten Flip-Flops (Sy) zugeführt ist.

4. Anordnung nach Anspruch 3, dadurch gekennzeichnet, dass die Impulsformer-Schaltung (S) so aufgebaut ist, dass an den ersten Eingängen zweier Und-Schaltungen das kontinuierliche Taktsignal (TE) und an den zweiten Eingängen dieser Und-Schaltungen das decodierte kontinuierliche Taktsignale (Ph2) anliegt, dass der Ausgang der Und-Schaltung über ein Invertierglied, das gleichzeitig als Laufzeitglied dient, mit dem ersten Eingang einer dritten Und-Schaltung und der Ausgang der zweiten Und-Schaltung direkt mit dem zweiten Eingang der dritten Und-Schaltung verbunden ist und dass am Ausgang der dritten Und-Schaltung ein sehr schmaler Impuls anliegt.


**Claims**

1. Method for clock pulse synchronization at the receiving end of a plesiochronous transmission system, wherein the phase detector of a phase control circuit is employed to furnish a control signal for a voltage controlled oscillator and the output signal of said oscillator is fed back into the phase control circuit, the channel specific, gaps containing clock pulse signal (Tm) of the demultiplexer is smoothed so that there results a continuous clock pulse signal (TE) at the rated frequency of the data signal, characterized in that, at the beginning of an alarm, during the alarm and at the end of the alarm, the control voltage for the voltage controlled oscillator (VCO) of the control circuit is retained by switching with the aid of a logic circuit at the amount of the steady state so that the rated frequency of the data signal is maintained even if there is a malfunction; at the beginning of the alarm the logic circuit switches in such a manner that instead of the jittered output signal (A) of the phase detector (PD) a jitter free signal having the same pulse duty factor as the jittered output signal of the phase detector (PD) is fed to the control circuit as control criterion; with the aid of the logic circuit, this switch is reversed only at the end of the alarm in such a manner that the channel-specific, gap-containing clock pulse signal (Tm) of the demultiplexer is switched in at that moment in time at which there is definitely no gap in the clock pulse sequence and the average of the phase swing of one transmission frame has been reached.

2. Arrangement for realizing the method according to claim 1, wherein the channel-specific, gaps-containing clock pulse signal (Tm) of the demultiplexer and the continuous clock pulse signal (TE) are each fed via a counter (Z1, Z2) and a decoder (DEC1, DEC2) to a phase detector (PD) and there the two clock pulse signals (Ph1, Ph2) can be compared with one another, with the filtered result signal (ST) of the comparison being employed to control a voltage controlled oscillator (VCO) at whose output there appears the continuous clock pulse signal (TE), characterized in that the output (A) of the phase detector (PD) is connected with the first input of a first AND circuit, the second input of the first AND circuit is connected with the inverted output ($\overline{Q}$) of a first flip-flop (U), the output of the first AND circuit is connected with the first input of an OR circuit, the reset input of a first counter (Z1) is connected with the normal output (Q) of the first flip-flop (U) and with the first input of a second AND circuit, the clock pulse output of a second counter (Z2) is connected with the second input of the second AND circuit; the output of the second AND circuit is connected with the second input of the OR circuit; the output (E) of the OR circuit is connected with the input of a lowpass filter; the gaps-containing clock pulse signal (Tm) is connected with the counter input of the first counter (Z1) and with the clock pulse input of a second flip-flop (Sy); an alarm signal (C) is connected, on the one hand, directly with the D-input of the first flip-flop (U) and, on the other hand, via an inverting member with the set input (S) of the first flip-flop; the decoded continuous clock pulse signal (Ph2) is fed to the D-input of the second flip-flop (Sy) and the frame signal (D) is fed to the R-Input of the second flip-flop (Sy).

3. Arrangement according to claim 2, characterized in that with the aid of a pulse shaping circuit (S), a very small pulse (I) can be generated from the decoded continuous clock pulse signal (Ph2) and the continuous clock pulse signal TE, said pulse lying in the middle of the decoded continuous clock pulse signal (Ph2) and being fed, instead of the decoded continuous clock pulse signal (Ph2), to the D-input of the second flip-flop (Sy).

4. Arrangement according to claim 3, characterized in that the pulse shaping circuit (S) has such a configuration that the continuous clock pulse signal (TE) is present at the first inputs of two AND circuits and the decoded continuous clock pulse signal (Ph2) is present at the second inputs of said AND circuits; the output of the AND circuit is connected, via an inverting member with simultaneously serves as delay member, with the first input of a third AND circuit and the output of the second AND circuit is connected directly with the second input of the third AND circuit and a very small pulse is present at the output of the third AND circuit.

## Revendications

1. Procédé de synchronisation d'horloge du côté réception d'un système de transmission plésiochrone, dans lequel le détecteur de phase d'une boucle de régulation de phase délivre un signal de commande à un oscillateur commandé en tension, dont le signal de sortie est ramené par réaction dans la boucle de régulation de phase, et le signal d'horloge discontinu de canal (Tm) du démultiplexeur est lissé de façon à produire un signal d'horloge continu (TE) à la fréquence nominale du signal d'information, ledit procédé étant caractérisé en ce que:

- au début d'une alarme, pendant et à la fin de l'alarme, la tension de commande de l'oscillateur commandé en tension (VCO) de la boucle de régulation est maintenue, par une commutation à l'aide d'un circuit logique, à la valeur absolue du régime établi, de sorte que la fréquence nominale du signal d'information est conservée même en cas de perturbation;

- au début de l'alarme, le circuit logique effectue une commutation en appliquant à la boucle de régulation un critère de commande constitué non par le signal de sortie à gigue (1) du détecteur de phase (PD), mais par un signal sans gigue présentant le même facteur de durée que le signal de sortie à gigue du détecteur de phase (PD); et

- le circuit logique supprime cette commutation à la fin de l'alarme seulement en connectant de nouveau le signal d'horloge discontinu de canal (Tm) du démultiplexeur à l'instant où la courbe d'horloge est à coup sûr exempte de lacune et la valeur moyenne de l'excursion de phase d'une trame de transmission est atteinte.

2. Dispositif pour la mise en œuvre du procédé selon revendication 1, dans lequel le signal d'horloge discontinu de canal (Tm) du démultiplexeur et le signal d'horloge continu (TE) sont transmis chacun par un compteur (Z1; Z2) et un décodeur (DEC1; DEC2) à un détecteur de phase (PD) qui compare les deux signaux d'horloge (Ph1, Ph2) et le signal filtré (ST) du résultat de la comparaison commande un oscillateur commandé en tension (VCO), dont la sortie délivre le signal d'horloge continu (TE), ledit dispositif étant caractérisé en ce que la sortie (A) du détecteur de phase (PD) est reliée à la première entrée d'un premier opérateur ET; la seconde entrée du premier opérateur ET est reliée à la sortie inversée ($\bar{Q}$) d'une première bascule (U); la sortie du premier opérateur ET est reliée à la première entrée d'un opérateur OU; l'entrée de remise à zéro d'un premier compteur (Z1) est reliée à la sortie normale (Q) de la première bascule (U) et à la première entrée d'un second opérateur ET; la sortie d'horloge d'un second compteur (Z2) est reliée à la seconde entrée du second opérateur ET; la sortie du second opérateur ET est reliée à la seconde entrée de l'opérateur OU; la sortie (E) de l'opérateur OU est reliée à l'entrée d'un filtre passe-bas; le signal d'horloge discontinu (Tm) est relié à l'entrée de comptage du premier compteur (Z1) et à l'entrée d'horloge d'une seconde bascule (Sy); un signal d'alarme (C) est relié directement à l'entrée D de la première bascule (U) d'une part et, par un inverseur, à l'entrée de mise à 1 (S) de la première bascule (U) d'autre part; le signal d'horloge continu décodé (Ph2) est appliqué à l'entrée D de la seconde bascule (Sy); et le signal de trame (D) est appliqué à l'entrée R de la seconde bascule (Sy).

3. Dispositif selon revendication 2, caractérisé en ce qu'à partir du signal d'horloge continu décodé (Ph2) et du signal d'horloge continu (TE), un conformateur d'impulsion (S) délivre une impulsion très étroite (I) qui se situe au milieu du signal d'horloge continu décodé (Ph2) et est appliquée à la place de ce dernier à l'entrée D de la seconde bascule (Sy).

4. Dispositif selon revendication 3, caractérisé en ce que le conformateur d'impulsion (S) est constitué de façon que le signal d'horloge continu (TE) est appliqué aux premières entrées de deux opérateurs ET et le signal d'horloge continu décodé (Ph2) est appliqué aux secondes entrées de ces opérateurs ET; la sortie de l'opérateur ET est reliée par un inverseur, servant simultanément d'organe de retard, à la première entrée d'un troisième opérateur ET et la sortie du deuxième opérateur ET est reliée directement à la seconde entrée du troisième opérateur ET; et la sortie du troisième opérateur ET délivre une impulsion très étroite.

0 084 675

FIG. 1

FIG. 2

FIG. 4

7

FIG.3

0 084 675

# FIG. 5

Alarmbeginn

B bzw. E

Alarmende

Keine Einphasung

Ph 2

C    C = 0    kein Alarm

D

Tm

Einphasung mit Unsicherheitsbereich

Ph 2

Tm

D

Sy (Q)

U (Q̄)

C    C = 0    kein Alarm

Z1

Ph 1

$\left|\ 1T\ \right|$

$\Delta\varphi' = 1T$

Unsicherheitsbereich bei der Einphasung

**Einphasung ohne Unsicherheitsbereich**

Ph 2

S) — Schmaler Impuls in der Mitte von Ph 2

Tm

D

Sy(Q)

U (Q̄)

C — C = 0 kein Alarm

Z1

Ph 1

## FIG. 6